(19) Europäisches Patentamt
European Patent Office
Office européen des brevets

(11) EP 1 788 032 B1

(12) # EUROPEAN PATENT SPECIFICATION

(45) Date of publication and mention of the grant of the patent:
**14.11.2012 Bulletin 2012/46**

(51) Int Cl.:
*C08L 83/04* (2006.01) *C08L 83/07* (2006.01)
*C09J 183/04* (2006.01) *C08G 77/50* (2006.01)

(21) Application number: **06255822.6**

(22) Date of filing: **14.11.2006**

(54) **Use of basic carbonates for reducing the compression set in addition curing silicone compositions**

Verwendung von basischen Carbonaten zum Reduzieren des Druckverformungsrestes in additionsvernetzenden Silikonzusammensetzungen

Utilisation de carbonates basiques pour reduire la déformation permanente dans des compositiones réticulables à base de silicone

(84) Designated Contracting States:
**DE**

(30) Priority: **17.11.2005 JP 2005333301**

(43) Date of publication of application:
**23.05.2007 Bulletin 2007/21**

(73) Proprietor: **Shin-Etsu Chemical Co., Ltd.**
**Tokyo (JP)**

(72) Inventor: **Hara, Hiroyasu,**
**c/o Silicone Denshi Zairyo Gijutsu**

**1-10, Hitomi,Matsuida-machi,Annaka-shi,**
**Gunma-ken (JP)**

(74) Representative: **Hallybone, Huw George et al**
**Carpmaels & Ransford**
**One Southampton Row**
**London**
**WC1B 5HA (GB)**

(56) References cited:
**EP-A- 0 415 180**
**EP-A- 0 489 391**
**EP-A- 0 581 504**
**EP-A- 1 225 211**
**WO-A-2004/070102**
**US-A1- 2005 137 321**
**US-B1- 6 354 620**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### BACKGROUND OF THE INVENTION

### 1. Field of the Invention

The present invention relates the use of an acid-receiving agent which is inorganic for reducing compression set of a cured product of an addition curing silicone composition for CIPG (Cured in Place Gasket), which yields a cured product with particularly superior compression set, and is ideal for use in sealing electronic components and structural components.

### 2. Description of the Prior Art

In order to enable liquid silicone rubbers, which exhibit superior levels of heat resistance, environmental resistance, and workability to be used as CIPG materials, much research has been conducted into improving the compression set of curable silicone resins. For example, addition curing silicone rubber compositions containing an alkyl titanate (patent reference 1), addition curing silicone rubber compositions containing cerium hydroxide (patent reference 2), and curable silicone rubber compositions containing a salt of a cationic organonitrogen compound (patent reference 3) are already known. Furthermore, curable silicone adhesive compositions that can be used for sealing electronic components or structural components are also being investigated, and are now commercially available.

However, these compositions are unable to provide stable compression set properties, and achieving a composition that offers both favorable adhesion to certain components, and an ability to exist as a one-part type composition (which requires an improvement in storage stability) has proven difficult. In particular, alkyl titanates and cerium hydroxide accelerate the deterioration of the hydrogensiloxanes that function as cross-linking agents, whereas salts of cationic organonitrogen compounds tend to invite deactivation of platinum group metal-based catalysts, both of which can have an adverse effect on addition curing silicone compositions.

Accordingly, the development of a material that produces a cured product with excellent compression set, while also offering excellent workability, and where required favorable adhesion, has been keenly sought.

[Patent Reference 1] EP 0 581 504 A2
[Patent Reference 2] EP 0 415 180 A2
[Patent Reference 3] EP 0 926 190 A1

US 6,354,620 discloses a curable silicone-based coating composition, curable to a flexible coating at a coat weight of up to 15 g/$m^2$ when cured, comprising an organopolysiloxane polymer having at least two silicon-bonded olefinically unsaturated hydrocarbon substituents, alkoxy groups or hydroxyl groups and having a degree of polymerization of no more than 150, a cross-linking organosilicon material having at least 3 silicon-bonded reactive groups and a catalyst.

US 2005/137321 A1 discloses a silicone composition and a process for improving the tear strength and the combing strength of coated fabrics intended for uses in the field of inflatable bags using a silicone composition comprising an additive containing a polyorganosiloxane resin and a calcium carbonate.

WO 2004/070101 discloses a composition suitable for coating on to textile fabrics and to textile fabrics coated with such compositions.

EP 1 225 211 A discloses an adhesive for silicon rubber that can be readily bonded to silicone rubber materials. An organopolysiloxane having an average of two or more alkenyl groups per molecule is the principal ingredient of the adhesive.

EP 0 489 391 A discloses increasing the tear strength and reducing the compression set value of cured organosiloxane elastomers.

### SUMMARY OF THE INVENTION

The present invention addresses the circumstances outline above, and has an object of using an acid-receiving agent which is inorganic for reducing compression set for a cured product of an addition curing silicone composition for CIPG, which yields a cured product with excellent compression set, and exhibits excellent storage stability, curing stability (curability following storage), and where required favorable adhesion.

As a result of intensive investigation aimed at achieving the above object, the inventors of the present invention determined that residual acid components left after synthesis of organohydrogenpolysiloxanes and subsequently incorporated within addition curing silicone compositions have an adverse effect on the compression set of the cured products

of those compositions. Organohydrogenpolysiloxanes are typically synthesized using an acid such as sulfuric acid or a sulfonic acid (such as methanesulfonic acid), and although neutralization treatment is conducted as part of the production process, complete neutralization or removal of the acid components is difficult. The inventors of the present invention discovered that trapping the acid components within an addition curing silicone composition using an acid-receiving agent which is inorganic provided an effective method of improving the compression set of the cured product of the composition, and they were thus able to complete the present invention. In other words, the present invention provides use of an acid-receiving agent which is a basic inorganic filler selected from a carbonate salt of an alkaline earth metal, a carbonate salt of an alkali metal and a zinc carbonate for reducing compression set for a cured product of an addition curing silicone composition for CIPG, comprising:

(A) 100 parts by mass of an organopolysiloxane containing at least two alkenyl groups bonded to silicon atoms within each molecule, represented by an average composition formula (1) shown below:

$$R^1_aR^2_bSiO_{(4-a-b)/2} \qquad (1)$$

(wherein, each $R^1$ represents, independently, an unsubstituted or substituted monovalent hydrocarbon group that contains no aliphatic unsaturated bonds, each $R^2$ represents, independently, an alkenyl group, a represents a number from 1.0 to 2.2, b represents a number from 0.0001 to 0.5, and a+b represents a number within a range from 1.5 to 2.7),
(B) an organohydrogenpolysiloxane represented by an average composition formula (2) shown below:

$$R^3_cH_dSiO_{(4-c-d)/2} \qquad (2)$$

(wherein, each $R^3$ represents, independently, an unsubstituted or substituted monovalent hydrocarbon group that contains no aliphatic unsaturated bonds, c represents a number from 0.7 to 2.1, d represents a number from 0.001 to 1.2, and c+d represents a number within a range from 0.8 to 3.0), in sufficient quantity to provide from 0.4 to 10.0 mols of hydrogen atoms bonded to silicon atoms within this component (B) for every 1 mol of alkenyl groups bonded to silicon atoms within the entire composition,
(C) an effective quantity of a platinum group metal-based catalyst, and
(D) a curing retarder.

The use according to the present invention yields a cured product (a silicone rubber elastomer) with particularly superior compression set, and also exhibits excellent storage stability, curing stability, and where required favorable adhesion, and is consequently ideal for sealing electronic components and structural components.

## DETAILED DESCRIPTION OF THE PREFERRED EMBODIMENTS

As follows is a more detailed description of the present invention. In this description, viscosity values refer to values measured at 25°C.

[Component (A)]

The component (A) is an organopolysiloxane containing at least two alkenyl groups bonded to silicon atoms within each molecule, represented by an average composition formula (1) shown below:

$$R^1_aR^2_bSiO_{(4-a-b)/2} \qquad (1)$$

(wherein, each $R^1$ represents, independently, an unsubstituted or substituted monovalent hydrocarbon group that contains no aliphatic unsaturated bonds, each $R^2$ represents, independently, an alkenyl group, a represents a number from 1.0 to 2.2, b represents a number from 0.0001 to 0.5, and a+b represents a number within a range from 1.5 to 2.7). The alkenyl groups may be bonded to the silicon atoms at the molecular chain terminals, to non-terminal silicon atoms (within the molecular chain), or to both these types of silicon atoms, but straight-chain diorganopolysiloxanes in which alkenyl groups are bonded to at least the silicon atoms at both molecular chain terminals are preferred. The component (A) may use either a single compound, or a combination of two or more different compounds. There are no particular restrictions on the molecular structure of the component (A), and straight-chain, branched, cyclic, and network structures are all suitable, although normally, straight-chain diorganopolysiloxanes in which the principal chain is formed from repeating diorganosiloxane units such as dimethylsiloxane units, vinylmethylsiloxane units, diphenylsiloxane units or methylphenylsiloxane units, and both terminals are blocked with triorganosiloxy groups such as trimethylsiloxy groups, vinyldimethylsiloxy groups, divinylmethylsiloxy groups, trivinylsiloxy groups, vinyldiphenylsiloxy groups, phenyldimethylsiloxy groups or vinylmethylphenylsiloxy groups are preferred. Furthermore, the component (A) may be either a polymer comprising a single type of siloxane unit, or a copolymer comprising two or more different siloxane units. The value of a is preferably a positive number from 1.5 to 2.0, b is preferably a positive number from 0.001 to 0.2, and a+b is preferably a positive number within a range from 1.9 to 2.1, and even more preferred values are positive numbers from 1.8 to 2.0 for a, from 0.001 to 0.1 for b, and from 1.95 to 2.04 for a+b.

Specific examples of $R^1$ include alkyl groups such as a methyl group, ethyl group, propyl group, isopropyl group, butyl group, hexyl group, octyl group, or dodecyl group; cycloalkyl groups such as a cyclopentyl group, cyclohexyl group, or cycloheptyl group; aryl groups such as a phenyl group, tolyl group, xylyl group, or naphthyl group; aralkyl groups such as a benzyl group, phenylethyl group, or phenylpropyl group; and groups in which a portion of, or all of, the hydrogen atoms within these hydrocarbon groups have been substituted with a fluorine atom, chlorine atom, or a nitrile group or the like, including a trifluoropropyl group, chloromethyl group, or cyanoethyl group. The $R^1$ groups may be either the same or different. Of the various possible components (A), those in which all of the $R^1$ groups are methyl groups are particularly preferred in terms of chemical stability and ease of synthesis. In such components, if required, a portion of these methyl groups may be substituted with phenyl groups or trifluoropropyl groups.

Specific examples of $R^2$ include a vinyl group, allyl group, propenyl group, isopropenyl group, butenyl group, or pentenyl group. The $R^2$ groups are preferably vinyl groups or allyl groups. Of the different possible components (A), components in which all of the $R^2$ groups are vinyl groups are the most preferred in terms of ease of synthesis and chemical stability.

The viscosity of the organopolysiloxane of the component (A) is preferably within a range from 10 to 500,000 mPa·s, and even more preferably from 50 to 500,000 mPa·s. Viscosity values within this range are preferred for the reasons listed below. Prior to curing, the viscosity of the composition can be suppressed to a level that ensures satisfactory workability. Following curing, the cured product can be prevented from becoming brittle, meaning the cured product can be more easily deformed or molded when the substrate is molded. Combinations of two or more different organopolysiloxanes may also be used as the component (A), provided the viscosity following mixing falls within the above range.

[Component (B)]

The component (B) is an organohydrogenpolysiloxane represented by an average composition formula (2) shown below:

$$R^3_cH_dSiO_{(4-c-d)/2} \qquad (2)$$

(wherein, each $R^3$ represents, independently, an unsubstituted or substituted monovalent hydrocarbon group that contains no aliphatic unsaturated bonds, c represents a number from 0.7 to 2.1, d represents a number from 0.001 to 1.2, and c+d represents a number within a range from 0.8 to 3.0). The value of c is preferably a positive number from 0.9 to 2.0, d is preferably a positive number from 0.01 to 1.0, and c+d is preferably a number within a range from 1.0 to 2.5. The component (B) may use either a single compound, or a combination of two or more different compounds. The component (B) functions as a cross-linking agent for forming a three dimensional structure, by reacting, in the presence of the platinum group metal-based catalyst of the component (C), with the alkenyl groups within the composition, and particularly the alkenyl groups bonded to silicon atoms within the component (A). Accordingly, the component must contain at least two (typically from 2 to 200), and preferably three or more, and even more preferably from 3 to 100, hydrogen atoms bonded to silicon atoms (namely, SiH groups) within each molecule. Synthesis of the component (B) typically involves the use of an acid such as sulfuric acid or a sulfonic acid (such as methanesulfonic acid).

There are no particular restrictions on the molecular structure of the component (B), and straight-chain, branched, cyclic, or three dimensional network structures are all suitable. Furthermore, the component (B) may be either a polymer formed solely from siloxane units containing at least one silicon-hydrogen bond (such as $(H)(R^3)_2SiO_{1/2}$ units, $(H)(R^3)SiO_{2/2}$ units, and $(H)SiO_{3/2}$ units), or a copolymer which comprises these types of siloxane units, together with one or more units selected from amongst triorganosiloxane units ($(R^3)_3SiO_{1/2}$ units), diorganosiloxane units ($(R^3)_2SiO_{2/2}$ units), monoorganosiloxane units ($(R^3)SiO_{3/2}$ units), and $SiO_{4/2}$ units. Although there are no particular restrictions on the polymerization degree (or the number of silicon atoms within each molecule) of the component (B), from the viewpoints of ensuring favorable co-solubility with the component (A) and ease of synthesis, the polymerization degree is typically a value that results in a total number of silicon atoms of 2 to 300, and preferably from 3 to 200, and even more preferably from 4 to 150.

Suitable examples of the above group $R^3$ include the same monovalent hydrocarbon groups as those presented as examples of the aforementioned group $R^1$. These $R^3$ groups may be either the same or different. Of the different possible components (B), those in which all of the $R^3$ groups are methyl groups are particularly preferred in terms of ease of synthesis and chemical stability. In such components, if required, a portion of the methyl groups may be substituted

with phenyl groups or trifluoropropyl groups.

Specific examples of the organohydrogenpolysiloxane of the component (B) include tris(dimethylhydrogensiloxy)methylsilane, tris(dimethylhydrogensiloxy)phenylsilane, 1,3,5,7-tetramethylcyclotetrasiloxane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of dimethylsiloxane and methylhydrogensiloxane with both terminals blocked with trimethylsiloxy groups, methylhydrogenpolysiloxane with both terminals blocked with dimethylhydrogensiloxy groups, copolymers of dimethylsiloxane and methylhydrogensiloxane with both terminals blocked with dimethylhydrogensiloxy groups, copolymers of methylhydrogensiloxane and diphenylsiloxane with both terminals blocked with trimethylsiloxy groups, copolymers of methylhydrogensiloxane, diphenylsiloxane, and dimethylsiloxane with both terminals blocked with trimethylsiloxy groups, copolymers of methylhydrogensiloxane, methylphenylsiloxane, and dimethylsiloxane with both terminals blocked with trimethylsiloxy groups, copolymers of methylhydrogensiloxane, dimethylsiloxane, and diphenylsiloxane with both terminals blocked with dimethylhydrogensiloxy groups, copolymers of methylhydrogensiloxane, dimethylsiloxane, and methylphenylsiloxane with both terminals blocked with dimethylhydrogensiloxy groups, copolymers comprising $(CH_3)_2HSiO_{1/2}$ units, $(CH_3)_3SiO_{1/2}$ units, and $SiO_{4/2}$ units, copolymers comprising $(CH_3)_2HSiO_{1/2}$ units and $SiO_{4/2}$ units, and copolymers comprising $(CH_3)_2HSiO_{1/2}$ units, $SiO_{4/2}$ units, and $(C_6H_5)_3SiO_{1/2}$ units, as well as compounds in which a portion of the methyl groups within the above compounds have been substituted with other alkyl groups such as ethyl groups or propyl groups, with halogen-substituted alkyl groups such as 3,3,3-trifluoropropyl groups, or with aryl groups such as phenyl groups, and compounds represented by the formulas shown below:

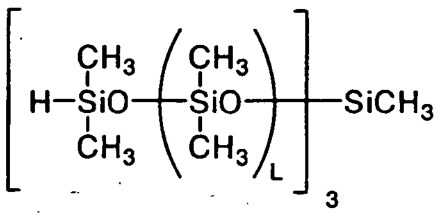
,

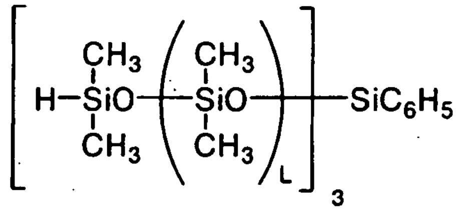

(wherein, L represents an integer from 2 to 10).

The quantity added of the component (B) is sufficient to provide from 0.4 to 10.0 mols, and preferably from 1.2 to 5.0 mols, of hydrogen atoms bonded to silicon atoms within the component (B) for each 1 mol of alkenyl groups bonded to silicon atoms within the overall composition (and in particular, alkenyl groups bonded to silicon atoms within the component (A)). If this quantity of hydrogen atoms is less than 0.4 mols, then curing of the composition may be inadequate, making it difficult to obtain a cured product with the required strength. In contrast, if the quantity of hydrogen atoms exceeds 10.0 mols, then the composition may undergo foaming on curing, and the physical properties of the cured product may be prone to changes over time.

[Component (C)]

The platinum group metal-based catalyst of the component (C) has a function of accelerating the addition reaction (hydrosilylation reaction) between the alkenyl group-containing organopolysiloxane of the component (A) and the organohydrogenpolysiloxane of the component (B). The component (C) may use either a single material, or a combination of two or more different materials. Conventional hydrosilylation reaction catalysts can be used as the component (C). Specific examples of the catalyst include platinum black, chloroplatinic acid, alcohol-modified products of chloroplatinic acid, complexes of chloroplatinic acid with olefins, aldehydes, vinylsiloxanes or acetylene alcohols, and rhodium.

In those cases where it is necessary to suppress contamination of the composition of the present invention by chlorine ions, a platinum-based catalyst that contains essentially no chlorine ions can be used. Examples of such catalysts

include zero-valent platinum complexes containing not more than 5 ppm of chlorine ions. Specific examples of these catalysts include the vinylsiloxane-platinum complexes disclosed in U.S. Pat. No. 3,715,334, No. 3,775,452, and No. 3,814,730.

The quantity added of the component (C) need only be sufficient to ensure effective activity as a hydrosilylation reaction catalyst, and can be increased or decreased in accordance with the desired curing rate. A typical quantity, calculated as the mass of platinum group metal atoms relative to the total mass of the composition, is within a range from 0.1 to 2,000 ppm, and quantities from 1 to 200 ppm are preferred.

[Component (D)]

The component (D) is a curing retarder, which is added to regulate the curing time of the composition of the present invention, thereby making the composition more suitable for practical application. The component (D) may use either a single material, or a combination of two or more different materials. Examples of the component (D) include conventional curing retarders, and specific examples include vinyl group-containing organopolysiloxanes such as vinylcyclotetrasiloxane; triallyl isocyanurate; alkyl maleates such as diallyl maleate; acetylene alcohol-based compounds; hydroperoxides such as ketone peroxide (Permek N, manufactured by NOF Corporation); N,N,N',N'-tetramethylethylenediamine; benzotriazole; and combinations of the above compounds. Of these, acetylene alcohol-based compounds are particularly preferred.

Specific examples of acetylene alcohol-based compounds include acetylene alcohols, and silane-modified or siloxane-modified products thereof.

Amongst the acetylene alcohols, compounds in which the ethynyl group and the hydroxyl group are bonded to the same carbon atom are particularly preferred. Specific examples of such compounds include the compounds shown below.

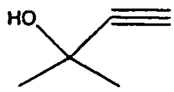

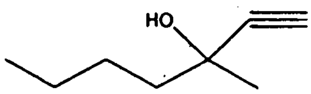

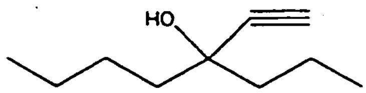

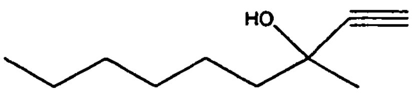

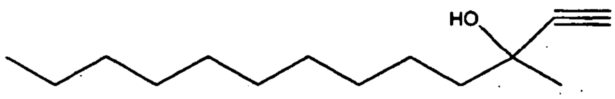

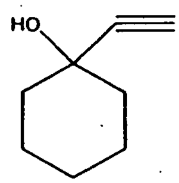

Furthermore, silane-modified and siloxane-modified products of acetylene alcohols refer to compounds in which the hydroxyl group of the acetylene alcohol has been converted to a Si-O-C linkage through silylation with either an alkoxysilane or an alkoxysiloxane respectively. Specific examples include the compounds shown below.

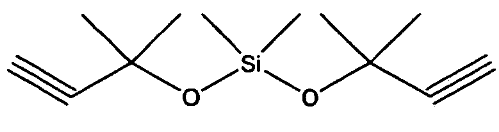

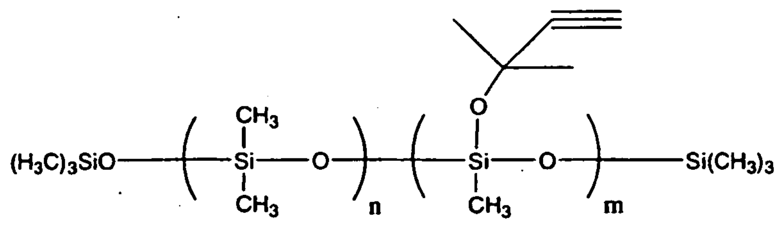

(wherein, n represents an integer from 0 to 50, and m represents an integer from 1 to 50, and preferably from 3 to 50)

The quantity added of the component (D) need only be sufficient to ensure the desired curing time, and can be increased or decreased as required, but is typically within a range from 0.0001 to 10 parts by mass, and preferably from 0.01 to 1 part by mass, per 100 parts by mass of the component (A).

[The acid-receiving agent which is inorganic]

The acid-receiving agent which is inorganic, is added to adsorb and neutralize residual acid components left after synthesis of the organohydrogenpolysiloxane of the component (B) and subsequently incorporated within the composition of the present invention. The compression set for a cured product of an addition curing silicone composition including the aforementioned components (A) through (D) can be effectively reduced by preparing a composition including said components (A) through (D) and the acid-receiving agent and curing said composition including said components (A) through (D) and the acid-receiving agent at room temperature or under heating. The acid-receiving agent may use either a single compound, or a combination of two or more different compounds.

The acid-receiving agent is selected from basic inorganic fillers. The basic inorganic fillers are selected from carbonate salts of alkaline earth metals, carbonate salts of alkali metals and zinc carbonate. Of these basic inorganic fillers, considering the effects on other properties of the composition of the present invention, carbonate salts of alkaline earth metals are preferred, and amongst these carbonate salts, calcium carbonate and zinc carbonate are particularly suitable owing to their ready availability. Because the acid-receiving agent which is inorganic can be added to a composition without impairing the storage stability or curing stability of the composition, the composition can be distributed as a one-part type composition that contains the acid-receiving agent which is inorganic. There are no particular restrictions on the time when the acid-receiving agent which is inorganic is mixed with the components (A) through (D). For example, the components (A) through (D) and the acid-receiving agent may be mixed together at the same time. The acid-receiving agent may also be added to the mixture of the components (A) through (D).

There are no particular restrictions on the quantity added of the acid-receiving agent which is inorganic, and a suitable quantity can be selected in accordance with factors such as the manifestation of the effects of the composition, and the physical properties of the resulting cured product. Specifically, the quantity is typically within a range from 0.01 to 50 parts by mass, and preferably from 0.1 to 30 parts by mass, per 100 parts by mass of the component (A).

[Other Components]

Adhesion-imparting agents such as alkoxysilanes may also be added to the composition. These adhesion-imparting agents impart the composition with superior self-adhesiveness to a variety of substrates such as metals and organic resins. Examples of suitable adhesion-imparting agents include organosilicon compounds such as silanes containing at least one, and preferably two or more, functional groups selected from a group consisting of alkenyl groups such as a vinyl groups, (meth)acryloxy groups, hydrosilyl groups (SiH groups), epoxy groups, alkoxy groups, carbonyl groups and phenyl groups, and cyclic or straight-chain siloxanes containing from 2 to 30, and preferably from 4 to 20, silicon atoms, as well as (mono-, di-, or tri-) alkoxysilyl-modified products of triallyl isocyanurate, and (partial) hydrolysis-condensation products thereof (namely, silicone-modified triallyl isocyanurates).

These adhesion-imparting agents may be used either alone, or in combinations of two or more different compounds, and the quantity used is typically not more than 15 parts by mass (that is, from 0 to 15 parts by mass), preferably from 0.01 to 10 parts by mass, and even more preferably from 0.1 to 5 parts by mass, per 100 parts by mass of the component (A), and although there are no particular restrictions on the quantity provided the addition does not impair the effects of the present invention, in those cases where the adhesion-imparting agent includes hydrosilyl groups (SiH groups) within the molecule, the quantity of the adhesion-imparting agent is preferably adjusted so that the molar ratio of the combined total of the hydrogen atoms bonded to silicon atoms (SiH groups) within the component (B) and the hydrogen atom bonded to silicon atoms (SiH groups) within the adhesion-imparting agent, relative to each 1 mol of alkenyl groups bonded to silicon atoms within the component (A), is within a range from 0.4 to 10, and particularly from 1.2 to 5.0.

Specific examples of the adhesion-imparting agent include the compounds shown below. Me represents a methyl group.

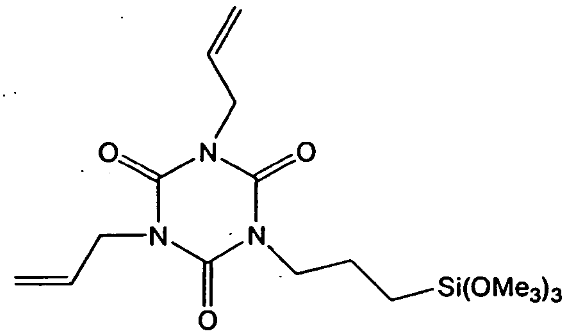

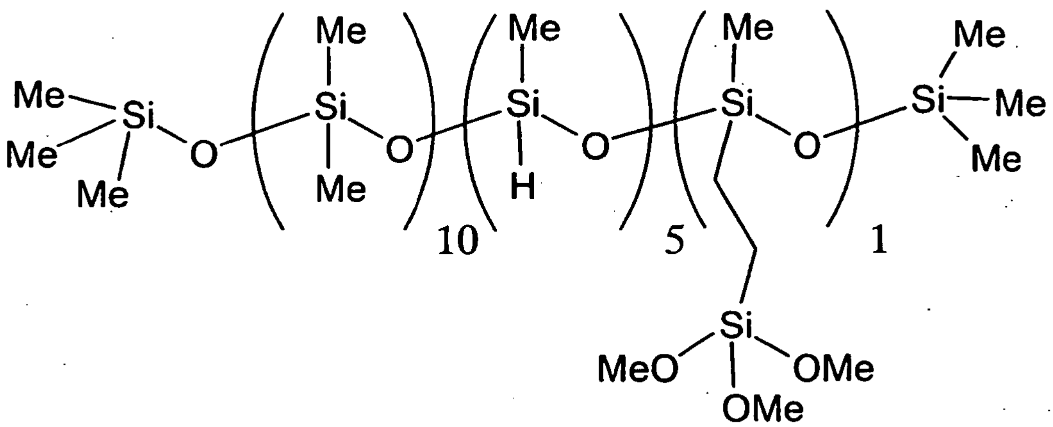

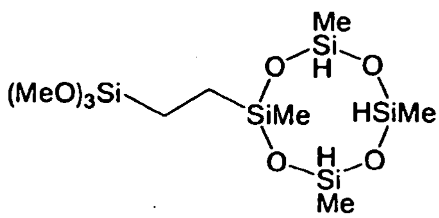

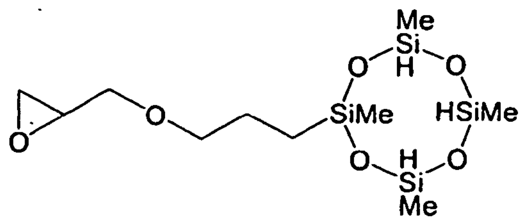

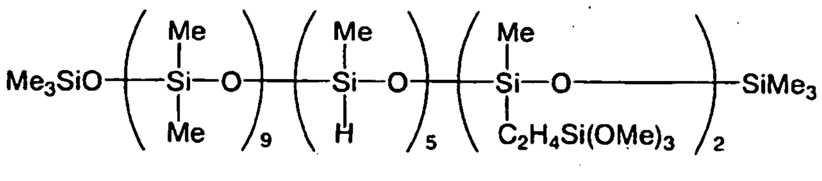

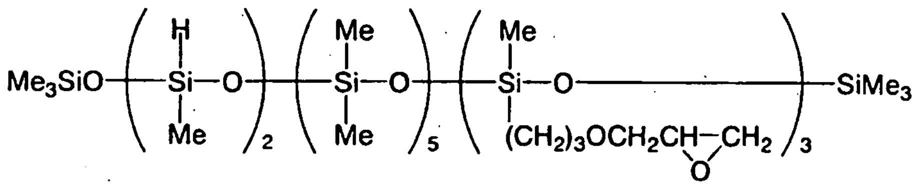

$CH_2=CHSi(OCH_3)_3$ , $C_6H_5Si(OCH_3)_3$ ,

$CH_2=CHSi(OC_2H_4OCH_3)_3$,

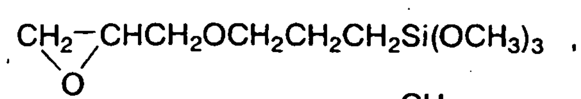

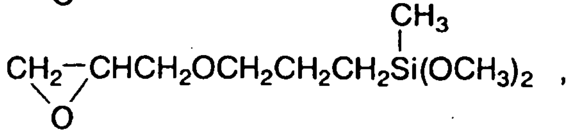

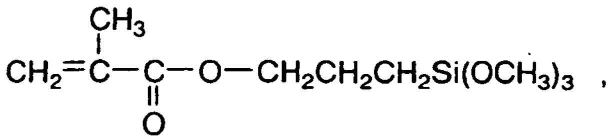

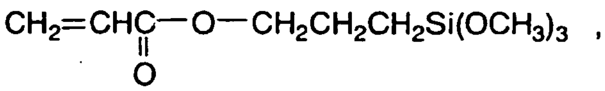

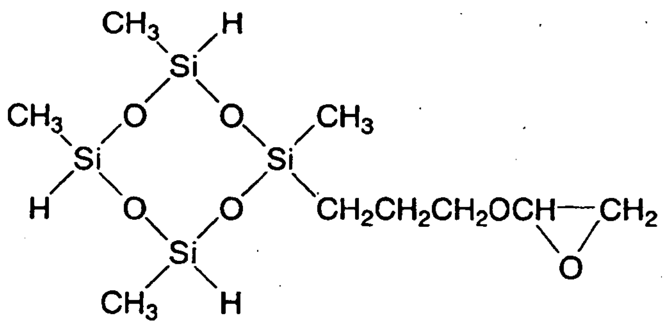

,

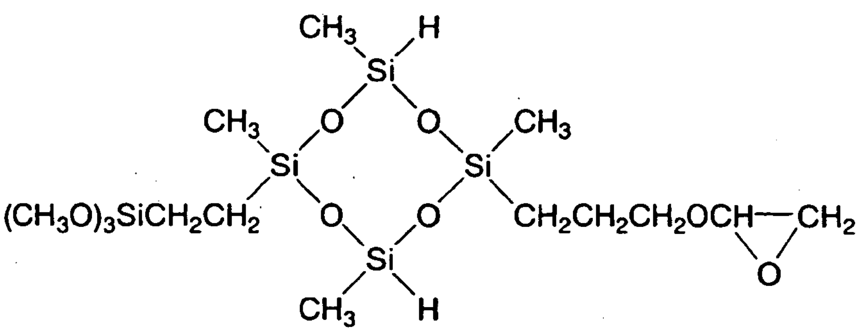

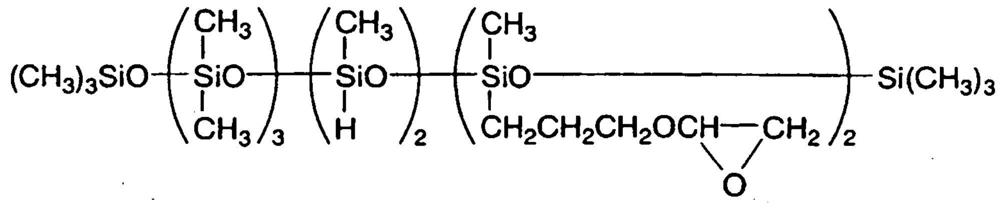

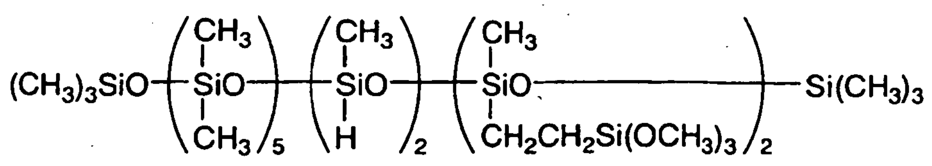

An adhesion-imparting agent such as those described above imparts the composition with self-adhesiveness, and improves the adhesion of the composition to substrates. There are no particular restrictions on the adherend, and suitable examples include glass, metals such as stainless steel and aluminum, and thermoplastic resins such as PBT, PPS, nylon, and ABS.

Other components may also be added to a composition, provided the quantity in which they are added does not impair the effects of the composition, and examples of such additives include reinforcing silica fillers, non-reinforcing fillers such as quartz powder and diatomaceous earth, colorants such as inorganic pigments like cobalt blue, and organic dyes, and heat resistance or flame retardancy improvement agents such as cerium oxide, red iron oxide, titanium oxide, and carbon black. In addition, in order to improve the conductive stability, carbon black or graphite or the like may also be added to the composition in a powdered form, as whiskers, or in a highly structured form.

[Composition Configuration]

The composition exhibits excellent storage stability and curing stability, and can therefore be prepared as a one-part type composition, thus offering excellent workability. Furthermore, in a similar manner to conventional curable silicone rubber compositions, the composition may also be prepared or stored as two or more separate liquids, with these liquids then mixed together and cured at the time of use. Accordingly, there are no particular restrictions on the configuration of the composition, and either a one-part type or two-part type composition is suitable, although in terms of workability at the time of use, a one-part type composition is preferred.

[Applications for the Composition]

A cured product of the composition exhibits superior compression set. Furthermore, as described above, the composition is able to be prepared as a one-part type composition, and consequently also provides excellent workability. In addition, if required, the composition may be imparted with adhesiveness, enabling an improvement in the level of adhesion to substrates. Accordingly, the composition is particularly suited to use within CIPG applications.

The composition can be applied to a substrate selected in accordance with the application, and subsequently cured by heating. There are no particular restrictions on the curing conditions employed, which vary depending on the quantity of the composition. The curing temperature is preferably within a range from room temperature (23±3°C) to 180°C, and even more preferably from room temperature to 120°C. A typical curing time is within a range from approximately 5 to 1,000 minutes.

The composition is useful for sealing electronic components and structural components. These components can be sealed using a cured product of a composition, using a method comprising the steps of:

applying the composition to the component, and
curing the composition to form a cured product on top of the component, thereby sealing the component with the cured product.

The curing conditions can employ the same conditions as those described above. Examples of suitable electronic components include transistors, IC, CPU or memory components, sensors, and electrical cells. Examples of suitable structural components include ECUs for vehicle installation, electrical equipment such as sensors, and mobile equipment.

EXAMPLES

As follows is a more detailed description of the present invention, based on a series of examples and comparative examples, although the present invention is in no way restricted to the examples presented below.

[Examples 1 to 8 wherein Examples 1 to 3, 7 and 8 are Reference Examples, Comparative Examples 1 to 6]

Various components were mixed together as per the Table 1, thus forming a series of compositions. In the table, the blend quantity of each component is shown in parts by mass. The components (A) through (F) in the table used the compounds shown below. Me represents a methyl group, and Vi represents a vinyl group.

(A) V-Sx

A vinyl group-containing organopolysiloxane represented by the formula:

$$ViMe_2Si\text{-}O\text{-}(SiMe_2\text{-}O)_{500}\text{-}SiMe_2Vi \text{ (viscosity: 10,000 mPa·s)}$$

(B) H-Sx

A hydrogenpolysiloxane represented by the formula:

$$Me_3Si\text{-}O\text{-}(SiMe_2\text{-}O)_{10}\text{-}(SiMeH\text{-}O)_{30}\text{-}SiMe_3 \text{ (viscosity: 70 mPa·s)}$$

(C) Platinum catalyst

A toluene solution of a complex of platinum and 1,2-divinyl-1,1,2,2-tetramethyldisiloxane (platinum content: 0.5% by mass)

(D) Curing retarder

A toluene solution of ethynylcyclohexanol (50% by mass)

(E) Acid-receiving agent which is inorganic

a. IXE (a registered trademark) -600 (Toagosei)
b. IXE (a registered trademark) -700 (Toagosei)
c. Kyoward (a registered trademark) 500 (Kyowa Chemical Industry Co., Ltd.)
d. Calcium carbonate
e. Zinc carbonate

(F) Adhesion-imparting agent

a. A compound represented by the formula below.

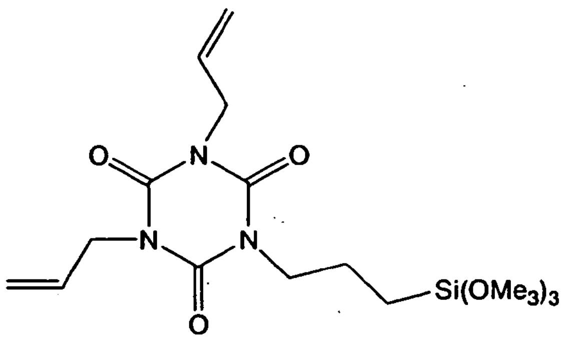

b. A compound represented by the formula below.

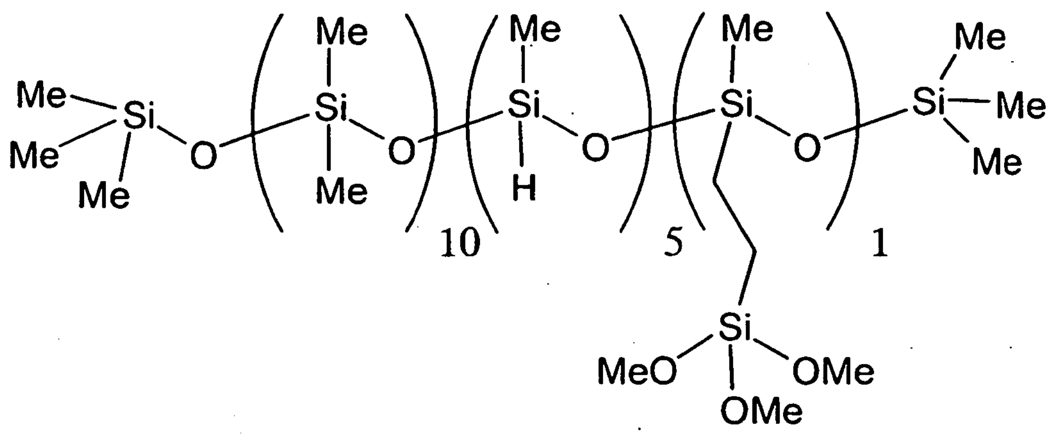

(Viscosity)

Using a rotational viscometer RB-80H (manufactured by Toki Sangyo Co., Ltd.), the viscosity of each of the compositions was measured immediately following preparation (initial), and then following storage for 7 days at 40°C. The results are shown in Table 1.

(Hardness)

Samples of the (initial) compositions immediately following preparation, and the compositions following storage for 7 days at 40°C were cured by heating at 120°C for 60 minutes. The hardness of each of the resulting cured products was then measured using a durometer type A hardness meter. The results of the measurements are shown in Table 1.

(Compression Set)

Samples of the compositions were cured by heating at 120°C for 60 minutes immediately following preparation, thus forming molded products with dimensions including a diameter of 25 mm and a height of 12.0 mm. Using a compression jig, the height of the molded product was compressed to 9.0 mm at a temperature of 110°C, and the molded product was held in that state for a period of 100 hours, 500 hours, or 1,000 hours. The height H of the molded product 30 minutes after completion and release of the compression was measured, and the compression set (%) was calculated using the following formula.

$$(12.0 - H) / (12.0 - 9.0) \times 100$$

(Shear Adhesive Strength)

Immediately following preparation, each of the compositions was sandwiched between either a pair of glass plates or a pair of stainless steel (SUS304) plates, and was subsequently cured by heating at 100°C for 60 minutes. The adhesive surface area was 25 mm × 10 mm, and the thickness of the adhesive layer was 2.0 mm. The shear adhesive strength of the thus obtained cured product was measured using an Autograph (AG-IS) device manufactured by Shimadzu Corporation. The results are shown in Table 1.

Table 1

| | | Example | | | | | | | | Comparative example | | | | | |
|---|---|---|---|---|---|---|---|---|---|---|---|---|---|---|---|
| | | Ref. Ex. t | Ref. Ex.2 | Ref. Ex.3 | 4 | 5 | 6 | Ref. Ex.7 | Ref Ex.8 | 1 | 2 | 3 | 4 | 5 | 6 |
| (A) V-Sx | | 100 | 100 | 100 | 100 | 100 | 100 | 100 | 100 | 100 | 100 | 100 | 100 | 100 | 100 |
| Fumed silica | | 10 | 10 | 10 | 10 | 10 | 10 | 10 | 10 | 10 | 10 | 10 | 10 | 10 | 10 |
| (C) Platinum catalyst | | 0.1 | 0.1 | 0.1 | 0.1 | 0.1 | 0.1 | 0.1 | 0.1 | 0.1 | 0.1 | 0.1 | 0.1 | 0.1 | 0.1 |
| (D) Curing retarder | | 0.2 | 0.2 | 0.2 | 0.2 | 0.2 | 0.2 | 0.2 | 0.2 | 0.2 | 0.2 | 0.2 | 0.2 | 0.2 | 0.2 |
| (B) H-Sx | | 2.5 | 2.5 | 2.5 | 2.5 | 2.5 | 2.5 | 2.5 | 2 | 2.5 | 2.5 | 2 | 2.5 | 2.5 | 2.5 |
| (E) Acid-receiving agent which is inorganic | a | 1 | | | | | | | | | | | | | |
| | b | | 1 | | | | | 1 | 1 | | | | | | |
| | c | | | 1 | | | | | | | | | | | |
| | d | | | | 1 | 10 | | | | | | | | | |
| | e | | | | | | 1 | | | | | | | | |
| (F) Adhesion-imparting agent | a | | | | | | | 1 | | | 1 | | | | |
| | b | | | | | | | | 2 | | | 2 | | | |
| Cerium oxide | | | | | | | | | | | | | 1 | | |
| TIPT | | | | | | | | | | | | | | 1 | |
| 0.1% aqueous solution of DTMA | | | | | | | | | | | | | | | 0.1 |
| Viscosity (Pa·s) | Initial | 61 | 62 | 61 | 63 | 70 | 65 | 120 | 150 | 60 | 130 | 150 | 65 | 80 | 72 |
| | After storage | 62 | 63 | 61 | 62 | 75 | 68 | 130 | 160 | 62 | 140 | 160 | 70 | 360 | 73 |
| Hardness | Initial | 35 | 35 | 35 | 36 | 41 | 36 | 32 | 33 | 35 | 30 | 31 | 32 | 28 | 18 |
| | After storage | 35 | 35 | 36 | 36 | 42 | 36 | 32 | 34 | 35 | 31 | 32 | 25 | 11 | × |

(continued)

| | | Example | | | | | | | | Comparative example | | | | | |
|---|---|---|---|---|---|---|---|---|---|---|---|---|---|---|---|
| | | Ref. Ex. t | Ref. Ex.2 | Ref. Ex.3 | 4 | 5 | 6 | Ref. Ex.7 | Ref Ex.8 | 1 | 2 | 3 | 4 | 5 | 6 |
| 25% Compression set (%) (110°C) | 100 hours | 18 | 16 | 20 | 18 | 16 | 20 | 18 | 19 | 24 | 26 | 27 | 23 | 34 | 22 |
| | 500 hours | 23 | 20 | 25 | 20 | 18 | 25 | 22 | 24 | 31 | 33 | 35 | 33 | 38 | 28 |
| | 1,000 hours | 30 | 26 | 32 | 29 | 23 | 32 | 29 | 31 | 46 | 50 | 53 | 43 | 42 | 37 |
| Shear adhesive strength (MPa) (100°C × 60 min.) | Glass | - | - | - | - | - | - | 1.9 | 1.9 | - | 1.8 | 1.9 | - | - | - |
| | SUS | - | - | - | - | - | - | 1.9 | 2 | - | 2 | 1.9 | - | - | - |
| (Notes) TIPT: tetraisopropoxy titanium, DTMA: dodecyltrimethylammonium, x: did not cure. | | | | | | | | | | | | | | | |

## Claims

1. Use of an acid-receiving agent which is a basic inorganic filler selected from a carbonate salt of an alkaline earth metal, a carbonate salt of an alkali metal and a zinc carbonate for reducing compression set for a cured product of an addition curing silicone composition, comprising

(A) 100 parts by mass of an organopolysiloxane containing at least two alkenyl groups bonded to silicon atoms within each molecule, represented by an average composition formula (1) shown below:

$$R^1_aR^2_bSiO_{(4-a-b)/2} \qquad (1)$$

wherein, each $R^1$ represents, independently, an unsubstituted or substituted monovalent hydrocarbon group that contains no aliphatic unsaturated bonds, each $R^2$ represents, independently, an alkenyl group, a represents a number from 1.0 to 2.2, b represents a number from 0.0001 to 0.5, and a+b represents a number within a range from 1.5 to 2.7
(B) an organohydrogenpolysiloxane represented by an average composition formula (2) shown below:

$$R^3_cH_dSiO_{(4-c-d)/2} \qquad (2)$$

wherein, each $R^3$ represents, independently, an unsubstituted or substituted monovalent hydrocarbon group that contains no aliphatic unsaturated bonds, c represents a number from 0.7 to 2.1, d represents a number from 0.001 to 1.2, and c+d represents a number within a range from 0.8 to 3.0 in sufficient quantity to provide from 0.4 to 10.0 mols of hydrogen atoms bonded to silicon atoms within said component (B) for every 1 mol of alkenyl groups bonded to silicon atoms within said composition,
(C) an effective quantity of a platinum group metal-based catalyst, and
(D) a curing retarder.

2. The use according to claim 1, wherein said composition exhibits self-adhesiveness.

3. The use according to claim 1, wherein said composition is a one-part type composition.

4. The use according to claim 1, wherein said acid-receiving agent is selected from calcium carbonate, zinc carbonate and a mixture thereof.

5. The use according to claim 1, wherein said acid-receiving agent is a basic inorganic filler selected from a carbonate salt of an alkaline earth metal.

## Patentansprüche

1. Verwendung eines säureaufnehmenden Mittels, bei dem es sich um einen basischen anorganischen Füllstoff, der unter einem Carbonatsalz eines Erdalkalimetalls, einem Carbonatsalz eines Alkalimetalls und einem Zinkcarbonat ausgewählt ist, handelt, zur Verringerung des Druckverformungsrests für ein gehärtetes Produkt einer additionshärtenden Silikonzusammensetzung, umfassend

(A) 100 Massenteile eines Organopolysiloxans mit mindestens zwei an Siliciumatome gebundenen Alkenylgruppen in jedem Molekül, das durch die nachstehend gezeigte durchschnittliche Zusammensetzungsformel wiedergegeben wird:

$$R^1_aR^2_bSiO_{(4-a-b)/2} \qquad (1)$$

worin $R^1$ jeweils unabhängig voneinander für eine gegebenenfalls substituierte einwertige Kohlenwasserstoffgruppe, die keine aliphatischen ungesättigten Bindungen enthält, steht, $R^2$ jeweils unabhängig voneinander für eine Alkenylgruppe steht, a für eine Zahl von 1,0 bis 2,2 steht, b für eine Zahl von 0,0001 bis 0,5 steht und a+b für eine Zahl im Bereich von 1,5 bis 2,7 steht,
(B) ein Organohydrogenpolysiloxan, das durch die nachstehend gezeigte durchschnittliche Zusammensetzungsformel (2) wiedergegeben wird:

$$R^3_cH_dSiO_{[(4-c-d)/2]} \qquad (2)$$

worin $R^3$ jeweils unabhängig voneinander für eine gegebenenfalls substituierte einwertige Kohlenwasserstoffgruppe, die keine aliphatischen ungesättigten Bindungen enthält, steht, c für eine Zahl von 0,7 bis 2,1 steht, d für eine Zahl von 0,001 bis 1,2 steht und c+d für eine Zahl im Bereich von 0,8 bis 3,0 steht, in einer zur Bereitstellung von 0,4 bis 10,0 mol an Siliciumatome gebundenen Wasserstoffatomen in Komponente (B) pro 1 mol an Siliciumatome gebundene Alkenylgruppen in der Zusammensetzung ausreichenden Menge,
(C) eine wirksame Menge eines auf Platingruppenmetall basierenden Katalysators und
(D) einen Härtungsverzögerer.

**2.** Verwendung nach Anspruch 1, wobei die Zusammensetzung selbstklebrig ist.

**3.** Verwendung nach Anspruch 1, wobei es sich bei der Zusammensetzung um eine einkomponentige Zusammensetzung handelt.

**4.** Verwendung nach Anspruch 1, wobei das säureaufnehmende Mittel unter Calciumcarbonat, Zinkcarbonat und einer Mischung davon ausgewählt ist.

**5.** Verwendung nach Anspruch 1, wobei es sich bei dem säureaufnehmenden Mittel um einen basischen anorganischen Füllstoff, der unter einem Carbonatsalz eines Erdalkalimetalls ausgewählt ist, handelt.

**Revendications**

**1.** Utilisation d'un agent de réception d'acide qui est une charge inorganique basique choisie parmi un sel de carbonate d'un métal alcalino-terreux, un sel de carbonate d'un métal alcalin et un carbonate de zinc pour réduire la rigidité à la compression pour un produit durci d'une composition de silicone de durcissement d'addition, comprenant

(A) 100 parties en masse d'un organopolysiloxane contenant au moins deux groupes alcényle liés à des atomes de silicium dans chaque molécule représentée par une formule de composition moyenne (1) décrite ci-dessous :

$$R^1_aR^2_bSiO_{(4-a-b)/2} \qquad (1)$$

dans laquelle chaque $R^1$ représente, indépendamment, un groupe hydrocarboné monovalent non substitué ou substitué qui ne contient aucune liaison insaturée aliphatique, chaque $R^2$ représente, indépendamment, un groupe alcényle, a représente un nombre de 1,0 à 2,2, b représente un nombre de 0,0001 à 0,5, et a+b représente un nombre dans une plage de 1,5 à 2,7,
(B) un organohydrogénopolysiloxane représenté par une formule de composition moyenne (2) décrite ci-dessous :

$$R^3_cH_dSiO_{(4-c-d)/2} \qquad (2)$$

dans laquelle chaque $R^3$ représente, indépendamment, un groupe hydrocarboné monovalent non substitué ou substitué qui ne contient aucune liaison insaturée aliphatique, c représente un nombre de 0,7 à 2,1, d représente un nombre de 0,001 à 1,2, et c+d représente un nombre dans une plage de 0,8 à 3,0 en quantité suffisante pour produire de 0,4 à 10,0 moles d'atomes d'hydrogène liés à des atomes de silicium dans ledit composant (B) pour chaque 1 mole de groupes alcényle liés à des atomes de silicium dans ladite composition,
(C) une quantité efficace d'un catalyseur à base de métal du groupe du platine, et
(D) un retardateur de durcissement.

**2.** Utilisation selon la revendication 1, dans laquelle ladite composition présente une autoadhésivité.

**3.** Utilisation selon la revendication 1, dans laquelle ladite composition est une composition de type à un composant.

**4.** Utilisation selon la revendication 1, dans laquelle ledit agent de réception d'acide est choisi parmi le carbonate de calcium, le carbonate de zinc, et un mélange de ceux-ci.

**5.** Utilisation selon la revendication 1, dans laquelle ledit agent de réception d'acide est une charge inorganique basique

choisie parmi un sel de carbonate d'un métal alcalino-terreux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0581504 A2
- EP 0415180 A2
- EP 0926190 A1
- US 6354620 B
- US 2005137321 A1
- WO 2004070101 A
- EP 1225211 A
- EP 0489391 A
- US 3715334 A
- US 3775452 A
- US 3814730 A